(19) Europäisches Patentamt
European Patent Office
Office européen des brevets

(11) **EP 2 545 355 B1**

(12) **FASCICULE DE BREVET EUROPEEN**

(45) Date de publication et mention
de la délivrance du brevet:
**18.12.2013 Bulletin 2013/51**

(21) Numéro de dépôt: **11707391.6**

(22) Date de dépôt: **28.02.2011**

(51) Int Cl.:
*G01N 5/02* *(2006.01)*  *G01N 5/04* *(2006.01)*
*G01N 29/24* *(2006.01)*

(86) Numéro de dépôt international:
**PCT/EP2011/052906**

(87) Numéro de publication internationale:
**WO 2011/110437 (15.09.2011 Gazette 2011/37)**

(54) **DISPOSITIF DE QUANTIFICATION DU DÉGAZAGE D'UN ÉQUIPEMENT PLACÉ DANS UNE ENCEINTE À VIDE**

VORRICHTUNG ZUR QUANTIFIZIERUNG DER ENTGASUNG EINER EINRICHTUNG IN EINER VAKUUMKAMMER

DEVICE FOR QUANTIFYING THE DEGASSING OF AN EQUIPMENT PLACED IN A VACUUM CHAMBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.03.2010 FR 1001001**

(43) Date de publication de la demande:
**16.01.2013 Bulletin 2013/03**

(73) Titulaire: **Thales**
**92200 Neuilly-sur-Seine (FR)**

(72) Inventeur: **BETTACCHIOLI, Alain**
**F-06150 Cannes-La-Bocca (FR)**

(74) Mandataire: **Nguyen, Dominique et al**
**Marks & Clerk France**
**Immeuble Visium**
**22, avenue Aristide Briand**
**94117 Arcueil Cedex (FR)**

(56) Documents cités:
**FR-A1- 2 602 589    US-A- 5 684 276**

**Description**

La présente invention concerne un dispositif de quantification du dégazage d'un équipement placé dans une enceinte à vide. Elle s'applique notamment au domaine des essais d'un équipement en environnement sous vide et plus particulièrement aux essais de dégazage sous vide des équipements spatiaux pour satellite.

Lors des essais de dégazage d'un équipement sous vide, il est souhaitable de pouvoir vérifier la fin du dégazage passif ou actif de l'équipement afin de décider s'il est opportun d'écourter ou de poursuivre la durée de l'essai ou de vérifier que le taux de désorption de l'équipement a atteint un niveau acceptable. La vérification de la fin du dégazage consiste généralement à s'assurer que la masse de particules dégazées par l'équipement et recueillies sur une surface donnée par le capteur dédié à la mesure, n'évolue plus au cours du temps malgré la persistence du vide. Le seul appareil connu pour de telles mesures est la microbalance à quartz qui mesure la masse d'un dépôt sur le quartz à partir du changement de fréquence de résonance du quartz qui en résulte. La mesure réalisée est très précise, cependant les informations que la microbalance à quartz permet d'obtenir ne sont satisfaisantes qu'à la condition que la masse du dépôt recueilli soit très faible, typiquement inférieure à une centaine de microgrammes par $cm^2$, de sorte que lorsqu'une substance bien identifiée se dépose comme une couche uniformément ordonnée, il est possible d'en déduire l'épaisseur du dépôt. La détermination de l'épaisseur de dépôt ne présente d'intérêt que dans le cadre de l'industrie du semi-conducteur qui doit prendre en considération des épaisseurs de dépôts lors des procédés de métallisation, d'oxydation ou d'épitaxie, par exemple. Dans ce cas, l'épaisseur du dépôt n'excède jamais quelques centaines d'Angströms. En revanche, lors des essais de dégazage en vide thermique, cette évaluation de l'épaisseur présente moins d'intérêt et l'on s'intéresse plutôt à la quantification de la masse de polluant déposée par unité de surface en différents endroits du système sous test. Pour des équipements à fort dégazage en vide thermique, tels que par exemple des panneaux solaires, cet appareil se sature trop rapidement en raison de sa grande sensibilité. Il est alors nécessaire de le régénérer très souvent par évaporation du dépôt recueilli. Les contraintes opérationnelles engendrées par ces régénérations fréquentes rendent la microbalance inadaptée pour la plupart des tests vide thermique et tout particulièrement ceux dédiés au dégazage d'équipements libérant des colles et des solvants car ils peuvent engendrer des dépôts dont l'ordre de grandeur s'évalue en dizaines de milligrammes par $cm^2$.

Les documents FR 2 602 589 et US 5 684 276 décrivent des dispositifs de mesure de masse qui ne sont pas adaptés à des mesures de dégazage d'équipements sous vide.

Le but de l'invention est de remédier aux inconvénients de la microbalance à quartz et de réaliser un dispositif de quantification du dégazage d'un équipement sous vide qui mesure une densité surfacique de masse déposée avec une précision de l'ordre de quelques microgrammes par centimètre carré et qui soit applicable à des dépôts denses et d'épaisseur hétérogène.

Pour cela, selon l'invention, le dispositif de quantification du dégazage d'un équipement placé dans une enceinte à vide comporte une lame métallique en matériau ferromagnétique comportant une extrémité fixe et une extrémité libre, la lame étant munie d'un dispositif de refroidissement et d'un dispositif de mesure de sa température intrinsèque, un électro-aimant d'excitation de la lame, un capteur de mesure de l'excitation de l'extrémité libre de la lame relié à un dispositif d'acquisition des mesures et de calcul d'au moins une fréquence d'oscillation de l'extrémité libre de la lame, le dispositif d'acquisition et de calcul étant relié à un dispositif de calcul d'une densité surfacique d'une masse déposée sur la lame.

Avantageusement, l'électro-aimant comporte une bobine alimentée périodiquement.

Avantageusement, le capteur de mesure de l'excitation de l'extrémité libre de la lame peut être constitué d'un aimant placé en regard de l'extrémité libre de la lame et d'une bobine, l'aimant étant placé au centre de la bobine.

Alternativement, le capteur de mesure de l'excitation de l'extrémité libre de la lame peut être constitué d'un ou de deux aimants placés directement sur l'extrémité fixe de la lame et d'une bobine placée en regard de l'extrémité libre de la lame.

Avantageusement, le dispositif d'acquisition de la fréquence d'oscillation de l'extrémité libre de la lame comporte un convertisseur analogique/numérique et un filtre de Tchebychev du quatrième ordre.

Avantageusement, le dispositif de quantification comporte en outre un dispositif de détermination de la fréquence d'oscillation de la lame seule dans l'enceinte à vide pour une valeur de température de la lame identique à celle correspondant à la lame dont la fréquence d'oscillation est mesurée.

Avantageusement, le dispositif de détermination de la fréquence d'oscillation de la lame seule comporte une courbe d'étalonnage de la fréquence d'oscillation de la lame seule en fonction de la température de la lame.

La température de la lame peut être contrôlée grâce à un ou deux modules à effet Peltier.

Avantageusement, la fréquence d'oscillation de la lame seule peut être corrigée en fonction de la pression résiduelle dans le caisson lorsque celle-ci excède $10^{-3}$ hectoPascal.

D'autres particularités et avantages de l'invention apparaîtront clairement dans la suite de la description donnée à titre d'exemple purement illustratif et non limitatif, en référence aux dessins schématiques annexés qui représentent :

- figure 1 : une vue schématique de côté d'un exemple de dispositif de quantification du dégazage d'un équipement sous vide, selon l'invention ;
- figure 2 : un exemple de chronogramme illustrant l'acquisition des mesures du dispositif, selon l'invention ;
- figure 3 : une vue schématique de dessus du dispositif de quantification du dégazage de la figure 1, selon l'invention ;
- figure 4 : une vue schématique de côté d'une variante de réalisation du dispositif de quantification du dégazage d'un équipement sous vide, selon l'invention;
- figure 5 : une vue schématique de dessus du dispositif de quantification du dégazage de la figure 4, selon l'invention;

Lors du dégazage des équipements placés dans une enceinte sous vide, les principaux polluants qui sont dégazés sont constitués par des particules, essentiellement de l'eau et des solvants, qui se condensent sur des surfaces froides. Le taux de particules désorbées par les équipements diminue lorsque la durée du test sous vide augmente. Pour quantifier le dégazage d'un équipement sous vide, l'invention consiste donc à mesurer la quantité de polluants déposés sur une surface froide constituée par une lame refroidie. Compte tenu de la température de solidification des particules polluantes, par exemple telles que l'eau dont la température de solidification est proche de 0°C entre la pression atmosphérique et 6 hectoPascal, de - 74°C vers $10^{-3}$ hectoPascal et de l'ordre de -110°C vers $10^{-6}$ hectoPascal, la température de la lame doit pouvoir être inférieure à cette valeur de température la plus faible de -110°C.

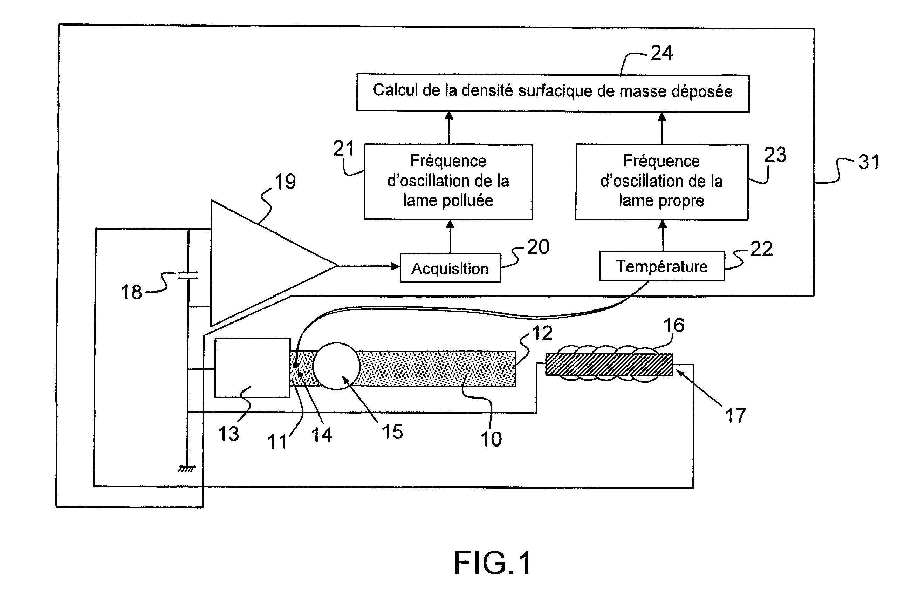

Le dispositif de quantification du dégazage d'un équipement sous vide représenté sur les figures 1 et 3 à 5 est destiné à être placé à l'intérieur d'une enceinte à vide en présence de l'équipement à tester. Le dispositif comporte une lame métallique 10 inoxydable souple et ayant des propriétés ferromagnétiques, c'est-à-dire, une perméabilité magnétique supérieure à 0,1, par exemple, un clinquant d'acier contenant 0,1% à 2 % de carbone. Par exemple, la lame 10 peut avoir une épaisseur de l'ordre du dixième de millimètre, une largeur standard de 12.7 mm et une longueur de l'ordre d'une quinzaine de centimètres. La lame 10 comporte une extrémité 11 fixée à un support fixe, non représenté, et une extrémité 12 libre. La lame 10 est munie d'un dispositif de refroidissement 13 et d'un dispositif de mesure de sa température intrinsèque, par exemple un thermocouple. Le dispositif de refroidissement 13 de la lame 10 peut, par exemple, comporter une tresse thermique reliant le support fixe à une source froide interne au caisson à vide, ou un ou deux modules à effet Peltier plaqués contre la lame, alimentés électriquement et reliés thermiquement, par exemple par des tresses thermiques 30, à une source froide permettant d'évacuer la chaleur qu'ils dégagent. Un électro-aimant 15, qui peut-être placé à côté de la lame 10, permet d'exciter la lame 10. L'électro-aimant 15 comporte une bobine alimentée périodiquement, la période T peut être par exemple égale à une minute, par une impulsion de courant électrique d'une durée T1 de quelques dixièmes de secondes. Sous l'effet de l'impulsion électrique, l'extrémité libre 12 de la lame se met alors à osciller librement à une fréquence d'oscillation qui dépend de sa masse.

Pour une lame 10 ayant une constante de raideur fixe, plus la masse de la lame augmente, plus sa fréquence d'oscillation diminue. En mesurant la fréquence d'oscillation de la lame propre et la fréquence d'oscillation de la lame au cours du test de dégazage de l'équipement sous vide, il est donc possible d'en déduire la masse de la pollution déposée par unité de surface sur la lame 10. Comme la fréquence d'oscillation de la lame 10 dépend aussi de sa température en raison de la variation de son module d'Young en fonction de la température, il est nécessaire de réaliser un étalonnage préliminaire permettant d'établir une courbe de variation de la fréquence de la lame propre en fonction de sa température. L'étalonnage est réalisé sous vide pour différentes températures de la lame seule, en l'absence de tout équipement dans l'enceinte à vide, et la courbe d'étalonnage obtenue est enregistrée.

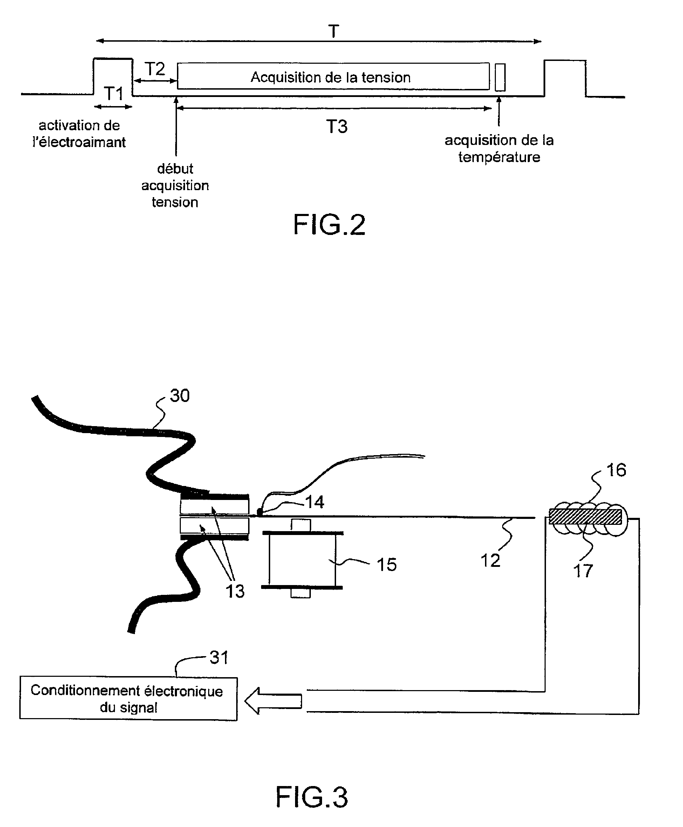

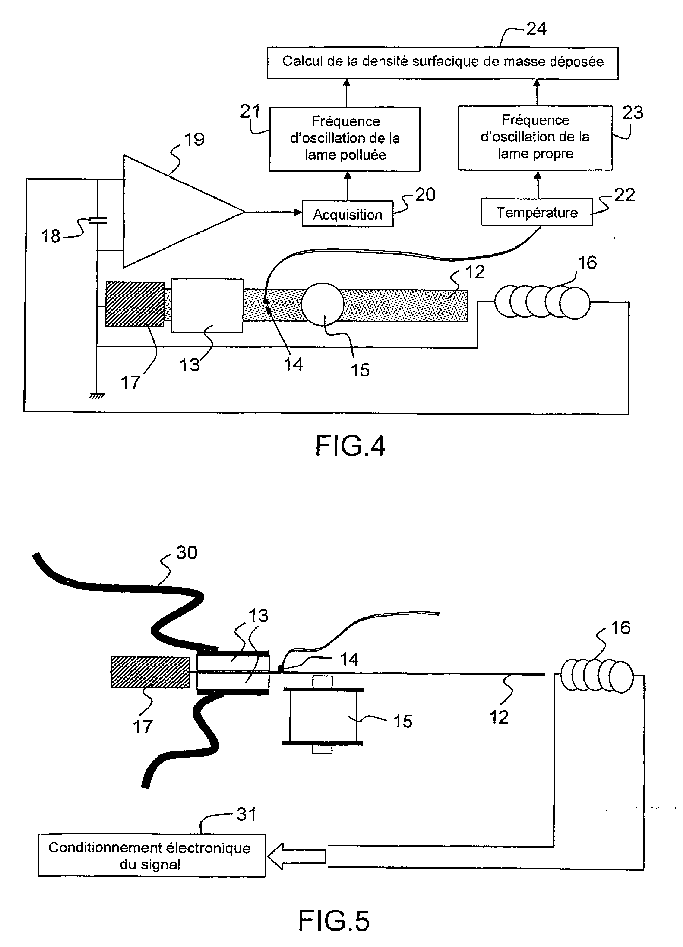

La mesure de la fréquence d'oscillation de la lame 10 est réalisée en utilisant une bobine 16 comportant un nombre de spires élevé, par exemple de l'ordre de 10000 spires. La lame 10 refroidie étant ferromagnétique, son extrémité libre est aimantée soit par influence avec un aimant permanent 17 placé au centre de la bobine comme représenté sur les figures 1 et 3 soit par un ou deux aimants 13 plaqués sur la lame 12 comme le montre les figures 4 et 5. La bobine 16 munie ou non de l'aimant permanent central 17 est placée devant l'extrémité libre 12 de la lame 10. La lame 10 refroidie étant ferromagnétique, l'aimant permanent 17 influence la lame dont l'extrémité libre s'aimante. Lorsque la lame aimantée oscille, elle engendre par effet de Lenz, une force électromotrice aux bornes de la bobine 16. La force électromotrice aux bornes de la bobine 16 a une valeur de tension qui varie en fonction du déplacement de l'extrémité aimantée de la lame et donc en fonction de la fréquence d'oscillation de la lame 10. Comme représenté sur la figure 2, la tension aux bornes de la bobine 16 est mesurée après un temps de latence T2 suivant l'excitation de la lame, par exemple T2 peut être de l'ordre de une seconde, permettant de s'affranchir d'une période de transition pendant laquelle le régime des oscillations s'établit et d'éviter les phénomènes parasites qui viendraient perturber l'estimation de la fréquence des oscillations de la lame. Cette précaution est également utile aux basses températures en raison de la rémanence magnétique qui peut perturber le début des oscillations libres de la lame. A l'issue du temps de latence T1, le régime des oscillations libres de la lame est atteint et les acquisitions de la tension délivrée par la bobine 16 démarrent avec une fréquence d'échantillonnage choisie et une durée prédéterminée T3, par exemple de l'ordre de 10000Hz durant 15 secondes, ce qui correspond à 15000 points de mesure. La tension aux bornes de la bobine 16 est transmise à un dispositif de conditionnement du signal 31 dans lequel elle est filtrée par un condensateur 18 qui permet d'éliminer les signaux parasites, puis appliquée en entrée d'un amplificateur de mesure 19. La sortie de l'amplificateur de mesure 19 est reliée à un dispositif d'acquisition des mesures 20 comportant un convertisseur analogique/numérique qui permet de numériser le signal amplifié et un filtre passe-bas qui permet de sélectionner un mode d'oscillation particulier et d'éliminer les autres modes. Par exemple le mode retenu peut être le premier mode, c'est-à-dire le mode fondamental. Comme la phase du signal n'est pas exploitée, le filtre retenu peut par exemple être un filtre de Tchebychev du quatrième ordre comportant des fréquences de coupure localisées à 60% de la fréquence centrale du filtre de part et d'autre de cette fréquence centrale. Après filtrage, le signal numérisé est transmis à un dispositif 21 de calcul de la fréquence d'oscillation de la lame polluée.

L'acquisition de la température de la lame 10 peut être réalisée par exemple à l'expiration de la durée T3 correspondant à l'acquisition des mesures de tension. Pour cela, le thermocouple placé sur la lame est connecté à un dispositif d'acquisition de la température 22 de la lame. Le thermocouple doit être isolé électriquement de la lame et pour cela il est placé, soit entre deux pastilles de kapton adhésif dont le diamètre n'excède pas 5 mm, soit maintenu sur la lame par un point de colle au silicone. La sortie du dispositif d'acquisition de la température 22 est reliée à un dispositif 23 de détermination de la fréquence de la lame propre correspondant à cette température. La détermination de la fréquence de la lame propre est obtenue à partir de la courbe d'étalonnage réalisée dans l'étape préliminaire d'étalonnage.

Les fréquences d'oscillation de la lame polluée et de la lame propre correspondant à une même température de la lame sont transmises à un dispositif 24 de calcul de la densité surfacique de la masse déposée sur la lame 10.

La densité surfacique $\sigma$ de la masse déposée sur la lame est obtenue par la relation suivante :

$$\sigma = \alpha \left[ \frac{[f^m(T)]^2}{[f_0(T)]^2} - 1 \right]$$

Où $\sigma$ est la masse déposée par unité de surface, $f_0$ est la fréquence d'oscillation de la lame propre à la température T, $f_m$ est la fréquence d'oscillation de la lame polluée à la température T, et $\alpha$ est un coefficient d'étalonnage.

Cette relation n'est valable que dans une enceinte où le vide est à une pression inférieure à $10^{-3}$ hectoPascal. Dans le cas où la pression est supérieure à cette valeur, la fréquence d'oscillation de la lame et la densité surfacique de masse déposée doivent être corrigées en tenant compte de la pression et de la nature du gaz résiduel. Cette correction permet à l'appareil de fonctionner également aux pressions intermédiaires situées entre $10^{-3}$ hectoPascal et la pression atmosphérique.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de quantification du dégazage d'un équipement placé dans une enceinte à vide, **caractérisé en ce qu'**il comporte une lame métallique (10) en matériau ferromagnétique comportant une extrémité fixe (11) et une extrémité libre (12), la lame étant munie d'un dispositif de refroidissement (13) et d'un dispositif de mesure de sa température intrinsèque (14, 22), un électro-aimant (15) d'excitation de la lame (10), un capteur de mesure (16, 17) de l'excitation de l'extrémité libre (12) de la lame relié à un dispositif de conditionnement du signal (31) comportant un dispositif d'acquisition (20) des mesures et de calcul (21) d'au moins une fréquence d'oscillation de l'extrémité libre de la lame, le dispositif d'acquisition et de calcul (20, 21) étant relié à un dispositif (24) de calcul d'une densité surfacique d'une masse déposée sur la lame.

2. Dispositif de quantification selon la revendication 1, **caractérisé en ce que** l'électro-aimant (15) comporte une bobine alimentée périodiquement.

3. Dispositif de quantification selon la revendication 2, **caractérisé en ce que** le capteur de mesure de l'excitation de l'extrémité libre de la lame est constitué d'un aimant (17) placé en regard de l'extrémité libre (12) de la lame (10) et d'une bobine (16), l'aimant (17) étant placé au centre de la bobine (16).

4. Dispositif de quantification selon la revendication 2, **caractérisé en ce que** le capteur de mesure de l'excitation de l'extrémité libre de la lame est constitué d'un ou deux aimants (17) placés directement sur l'extrémité fixe de la lame (10) et d'une bobine (16) placée en regard de l'extrémité libre (12) de la lame (10).

5. Dispositif selon l'une des revendications 2 à 4, **caractérisé en ce que** le dispositif d'acquisition (20) de la fréquence d'oscillation de l'extrémité libre de la lame comporte un convertisseur analogique/numérique et un filtre de Tchebychev du quatrième ordre.

6. Dispositif selon l'une des revendications 2 à 5, **caractérisé en ce qu'**il comporte en outre un dispositif (23) de détermination de la fréquence d'oscillation de la lame seule dans l'enceinte à vide pour une valeur de température identique à celle correspondant à la lame (10) dont la fréquence d'oscillation est mesurée.

7. Dispositif selon l'une des revendications 2 à 6, **caractérisé en ce que** le dispositif (23) de détermination de la fréquence d'oscillation de la lame seule comporte une courbe d'étalonnage de la fréquence d'oscillation de la lame seule en fonction de la température de la lame.

8. Dispositif selon l'une des revendications 2 à 7, **caractérisé en ce que** la fréquence d'oscillation de la lame seule est corrigée en fonction de la pression résiduelle dans le caisson lorsque celle-ci excède $10^{-3}$ hectoPascal.

**Patentansprüche**

1. Vorrichtung zum Quantifizieren der Entgasung einer Ausrüstung in einer Vakuumkammer, **dadurch gekennzeichnet, dass** sie Folgendes umfasst: ein metallisches Plättchen (10) aus ferromagnetischem Material, das ein festes Ende (11) und ein freies Ende (12) aufweist, wobei das Plättchen eine Kühlvorrichtung (13) und eine Vorrichtung (14, 22) zum Messen seiner Eigentemperatur aufweist, einen Elektromagnet (15) zum Erregen des Plättchens (10), einen Sensor (16, 17) zum Messen der Erregung des freien Endes (12) des Plättchens, verbunden mit einer Vorrichtung (31) zum Konditionieren des Signals, die eine Vorrichtung zum Erfassen (20) von Messwerten und zum Berechnen (21) von wenigstens einer Oszillationsfrequenz des freien Endes des Plättchens umfasst, wobei die Erfassungs- und Berechnungsvorrichtung (20, 21) mit einer Vorrichtung (24) zum Berechnen einer Oberflächendichte einer auf dem Plättchen abgesetzten Masse verbunden ist.

2. Quantifizierungsvorrichtung nach Anspruch 1, **dadurch gekennzeichnet, dass** der Elektromagnet (15) eine periodisch gespeiste Spule umfasst.

3. Quantifizierungsvorrichtung nach Anspruch 2, **dadurch gekennzeichnet, dass** der Sensor zum Messen der Erregung des freien Endes des Plättchens von einem Magnet (17) gebildet wird, der sich gegenüber dem freien Ende (12) des Plättchens (10) und einer Spule (16) befindet, wobei der Magnet (17) in der Mitte der Spule (16) platziert ist.

4. Quantifizierungsvorrichtung nach Anspruch 2, **dadurch gekennzeichnet, dass** der Sensor zum Messen der Erregung des freien Endes des Plättchens von einem oder zwei Magneten (17) gebildet wird, die direkt auf dem festen Ende des Plättchens (10) und einer Spule (16) platziert sind, die sich gegenüber dem freien Ende (12) des Plättchens (10) befindet.

5. Vorrichtung nach einem der Ansprüche 2 bis 4, **dadurch gekennzeichnet, dass** die Vorrichtung (20) zum Erfassen der Oszillationsfrequenz des freien Endes des Plättchens einen Analog-Digital-Wandler und ein Tschebyscheff-Filter vierter Ordnung umfasst.

6. Vorrichtung nach einem der Ansprüche 2 bis 5, **dadurch gekennzeichnet, dass** sie ferner eine Vorrichtung (23) zum Ermitteln der Oszillationsfrequenz des Plättchens allein in der Vakuumkammer für einen Temperaturwert umfasst, der mit dem identisch ist, der dem Plättchen (10) entspricht, dessen Oszillationsfrequenz gemessen wird.

7. Vorrichtung nach einem der Ansprüche 2 bis 6, **dadurch gekennzeichnet, dass** die Vorrichtung (23) zum Ermitteln der Oszillationsfrequenz des Plättchens allein eine Kalibrationskurve der Oszillationsfrequenz des Plättchens allein in Abhängigkeit von der Temperatur des Plättchens umfasst.

8. Vorrichtung nach einem der Ansprüche 2 bis 7, **dadurch gekennzeichnet, dass** die Oszillationsfrequenz des Plättchens allein in Abhängigkeit vom Restdruck in dem Gehäuse korrigiert wird, wenn dieser $10^{-3}$ Hectopascal übersteigt.

**Claims**

1. A device for quantifying the degassing of an equipment placed in a vacuum chamber, **characterised in that** it comprises a metal blade (10) made from ferromagnetic material comprising a fixed end (11) and a free end (12), said blade being provided with a cooling device (13) and a device (14, 22) for measuring its intrinsic temperature, an electromagnet (15) for exciting said blade (10), a sensor (16, 17) for measuring the excitation of said free end (12) of said blade, which sensor is connected to a signal conditioning device (31) comprising a device (20) for acquiring measurements and for calculating (21) at least one oscillation frequency of said free end of said blade, said acquisition and calculation device (20, 21) being connected to a device (24) for calculating a surface density of a mass deposited onto said blade.

**2.** The quantification device according to claim 1, **characterised in that** said electromagnet (15) comprises a periodically powered coil.

**3.** The quantification device according to claim 2, **characterised in that** said sensor for measuring the excitation of said free end of said blade is constituted by a magnet (17) placed opposite said free end (12) of said blade (10) and of a coil (16), with said magnet (17) being placed at the centre of said coil (16).

**4.** The quantification device according to claim 2, **characterised in that** said sensor for measuring the excitation of said free end of said blade is constituted by one or two magnets (17) placed directly on said fixed end of said blade (10) and a coil (16) placed opposite said free end (12) of said blade (10).

**5.** The device according to any one of claims 2 to 4, **characterised in that** said device (20) for acquiring the oscillation frequency of said free end of said blade comprises an analogue/digital converter and a fourth-order Chebyshev filter.

**6.** The device according to any one of claims 2 to 5, **characterised in that** it further comprises a device (23) for determining the oscillation frequency of said blade only in said vacuum chamber at a temperature value that is identical to that corresponding to said blade (10), the oscillation frequency of which is measured.

**7.** The device according to any one of claims 2 to 6, **characterised in that** said device (23) for determining the oscillation frequency of said blade only comprises a calibration curve of the oscillation frequency of said blade only as a function of the temperature of said blade.

**8.** The device according to any one of claims 2 to 7, **characterised in that** the oscillation frequency of said blade only is corrected as a function of the residual pressure in the casing when it exceeds $10^{-3}$ hectopascals.

FIG.1

EP 2 545 355 B1

T

T2

Acquisition de la tension

T1

activation de
l'électroaimant

début
acquisition
tension

T3

acquisition de la
température

FIG.2

30

14

16

13

15

12

17

31

Conditionnement électronique
du signal

FIG.3

24

Calcul de la densité surfacique de masse déposée

21 Fréquence d'oscillation de la lame polluée

23 Fréquence d'oscillation de la lame propre

19

20 Acquisition

22 Température

18

17 13 14 15 12 16

FIG.4

30

13

14

16

17

15

12

31 Conditionnement électronique du signal

FIG.5

**EP 2 545 355 B1**

**RÉFÉRENCES CITÉES DANS LA DESCRIPTION**

**Documents brevets cités dans la description**

- FR 2602589
- US 5684276 A